# EUROPÄISCHE PATENTSCHRIFT

(11) **EP 4 476 023 B1**
(45) Veröffentlichungstag und Bekanntmachung des Hinweises auf die Patenterteilung: **23.07.2025**
(21) Anmeldenummer: 23710999.6
(22) Anmeldetag: 10.03.2023
(51) Int. Cl.: B25B 21/00, B21J 5/06, B23P 19/06

(54) **SCHRAUBVORRICHTUNG**
SCREWING DEVICE
DISPOSITIF DE VISSAGE

(30) Priorität: 22.03.2022 DE 102022106710
(43) Veröffentlichungstag der Anmeldung: 18.12.2024
(73) Patentinhaber: Weber Schraubautomaten GmbH, 82515 Wolfratshausen (DE)
(72) Erfinder: BÖCK, Sebastian, 82541 Holzhausen (DE); KROLL, Franz, 82544 Egling (DE); STÜTZER, Robert, 82515 Wolfratshausen (DE)
(74) Vertreter: Manitz Finsterwald Patent- und Rechtsanwaltspartnerschaft mbB
(86) Internationale Anmeldenummer: PCT/EP2023/056142
(87) Internationale Veröffentlichungsnummer: WO 2023/180094

(56) Entgegenhaltungen:
- EP-A1- 2 944 418
- DE-U1- 202013 000 092
- US-A1- 2007 101 787

## Beschreibung

Die Erfindung betrifft eine Schraubvorrichtung und die Verwendung einer solchen Schraubvorrichtung.

Aus dem Stand der Technik ist es bekannt, gewindefurchende Schrauben, beispielsweise Fließloch formende Schrauben, mittels einer Schraubvorrichtung in ein Bauteil einzubringen. Eine solche Schraubvorrichtung weist einen Rotationsantrieb auf, um eine in Form von Antriebswellen ausgebildete Antriebsdrehmoment-Übertragungseinheit der Schraubvorrichtung rotativ anzutreiben. Die Antriebsdrehmoment-Übertragungseinheit ist am rotationsantriebsfernen Ende mit einem Bit gekoppelt, der in ein Angriffsmerkmal der Schraube eingreift, um die Schraube in Rotation zu versetzten. Zudem weist eine solche Schraubvorrichtung einen Vorschubantrieb auf, um den Bit und damit die Schraube in Vorschubrichtung, d.h. in axialer Richtung, zu bewegen. Aus den Dokumenten US 2007/101787 A1 und EP 2 944 418 A1 sind Vorrichtungen nach dem Oberbegriff von Anspruch 1 bekannt.

Damit der Bit und damit die Schraube in axialer Richtung relativ zu dem Rotationsantrieb bewegbar sind und gleichzeitig das Antriebsdrehmoment von dem Rotationsantrieb über die Antriebsdrehmoment-Übertragungseinheit auf den Bit und die Schraube übertragbar sind, weisen bekannte Schraubvorrichtungen eine Antriebsdrehmoment-Übertragungseinheit mit einer Welle-Nabe-Verbindung auf. Diese Welle-Nabe-Verbindung ermöglicht es, dass sich ein schraubennaher Abschnitt der Antriebsdrehmoment-Übertragungseinheit in axialer Richtung relativ zu einem rotationsantriebsnahen Abschnitt der Antriebsdrehmoment-Übertragungseinheit verschieben lässt. Hierdurch kann der schraubennahe Abschnitt der Antriebsdrehmoment-Übertragungseinheit unter Last eine durch den Vorschubantrieb bewirkte Vorschubbewegung durchführen, während der rotationsantriebsnahe Abschnitt der Antriebsdrehmoment-Übertragungseinheit und ein fest mit dem rotationsantriebsnahen Abschnitt der Antriebsdrehmoment-Übertragungseinheit verbundener Rotor des Rotationsantriebs diese Vorschubbewegung nicht durchführen. In anderen Worten ermöglich die Welle-Nabe-Verbindung, dass die Antriebsdrehmoment-Übertragungseinheit während des Einschraubprozesses hinsichtlich ihrer wirksamen Länge veränderbar ist und somit der Bit und die Schraube eine Vorschubbewegung relativ zu dem Rotationsantrieb durchführen können, während der Rotationsantrieb ein Drehmoment über die Antriebswelle auf den Bit und die Schraube aufbringt.

Bekannte Schraubvorrichtungen haben den Nachteil, dass die Welle-Nabe-Verbindung einem hohen Verschleiß unterliegt. Speziell bei hohen Drehmomentbelastungen, welche beispielsweise während des Gewindefurchens beim Verarbeiten von selbstfurchenden Schrauben auftreten, entsteht eine hohe Flächenpressung an der Welle-Nabe-Verbindung, wodurch eine axiale Verschiebung der Welle relativ zur Nabe hohe Reibkräfte zwischen der Welle und der Nabe verursacht. Durch die hohen Reibkräfte entsteht ein hoher Verschleiß an der Welle-Nabe-Verbindung. Zudem ist aufgrund der hohen Reibkräfte ein leistungsstarker Vorschubantrieb nötig, um die axiale Verschiebung der Welle relativ zur Nabe prozesssicher zu bewirken, was zu höheren Kosten für den Vorschubantrieb führt.

Ein weiterer Nachteil bekannter Schraubvorrichtungen besteht darin, dass die von dem Vorschubantrieb zu erzeugende Vorschubkraft schwierig zu steuern ist. Wenn die Welle-Nabe-Verbindung, beispielsweise während des Gewindefurchens, mit einem hohen Drehmoment belastet ist, wird eine hohe Vorschubkraft benötigt, um eine Haftreibung zwischen der Welle und der Nabe zu überwinden und eine axiale Relativbewegung zwischen Welle und Nabe zu bewirken. Sobald diese Haftreibung überwunden ist, kann die für die axiale Relativbewegung benötigte Vorschubkraft erheblich abfallen. Durch die großen Veränderungen der benötigten Vorschubkraft während des Schraubprozesses ist die Steuerung der Vorschubkraft schwierig.

Es ist eine Aufgabe der vorliegenden Erfindung, eine Schraubvorrichtung bereitzustellen, die verschleißärmer ausgebildet ist und eine einfachere Steuerung ermöglicht.

Die Aufgabe wird gelöst durch eine Schraubvorrichtung mit den Merkmalen des Anspruchs 1 und insbesondere dadurch, dass eine Ausgleichskupplung vorgesehen ist, welche bei einer den ersten Drehmomentbelastungsbereich übersteigenden Drehmomentlast eine gemeinsame axiale Bewegung der Welle und der Nabe relativ zu dem Rotationsantrieb zulässt.

Der Erfindung liegt der Gedanke zugrunde, eine eigentlich notwendige Relativbewegung der Welle und der Nabe, wenn ein hohes Drehmoment anliegt, zu vermeiden, um die Welle und die Nabe zu schonen. Hierzu ist die Ausgleichskupplung vorgesehen, die einen, von einer Welle-Nabe-Einheit unabhängigen, axialen Ausgleich zulässt, sodass die Welle und die Nabe gemeinsam einen axialen Weg zurücklegen können, der ohne Ausgleichskupplung einer Relativbewegung zwischen der Welle und der Nabe entsprechen würde.

Die Schraubvorrichtung dient zum Setzen einer Schraube, d.h. zum Befestigen einer Schraube an einem Werkstück. Die Vorteile der Schraubvorrichtung kommen speziell dann zum Tragen, wenn der Schraubprozess ein hohes maximales Drehmoment erfordert. Ein solches hohes maximales Drehmoment wird in der Regel bei gewindefurchenden Schrauben während des Gewindefurchens benötigt, d.h. während die jeweilige Schraube ein Gewinde in das Werkstück schneidet. Ein anderer Anwendungsfall, bei dem in der Regel ein hohes maximales Drehmoment benötigt wird, ist das Setzen von Schrauben mit einer Beschichtung auf dem Gewinde, beispielsweise zur Abdichtung oder zu Sicherung der Schraube. Üblicherweise werden für diese Anwendungsfälle mit hohem maximalem Drehmoment maximale Drehmomente von über 4 Nm, d.h. vier Newtonmeter, benötigt.

Die Schraubvorrichtung weist einen Rotationsantrieb zum rotativen Antrieb der Schraube auf. Hierzu treibt der Rotationsantrieb eine sich von dem Rotationsantrieb bis zu einem Bit erstreckende, mehrere Antriebswellen aufweisende, Antriebsdrehmoment-Übertragungseinheit an. Der Rotationsantrieb kann als Elektromotor ausgebildet sein.

Zudem weist die Schraubvorrichtung einen Vorschubantrieb auf, der während des Schraubprozesses einen axialen Vorschub bewirkt. Der Vorschubantrieb kann beispielsweise pneumatisch oder elektrisch ausgebildet sein.

Die Schraubvorrichtung umfasst die zuvor genannte Welle-Nabe-Einheit. Die Welle-Nabe-Einheit ist Teil der Antriebsdrehmoment-Übertragungseinheit, welche zur Übertragung eines Drehmoments von dem Rotationsantrieb zum Bit dient. Die Welle-Nabe-Einheit umfasst eine Antriebswelle und eine entsprechende Nabe. Die Antriebswelle greift formschlüssig in die Nabe ein, um das Drehmoment von der Antriebswelle auf die Nabe oder von der Nabe auf die Antriebswelle zu übertragen. Hierzu weist die Antriebswelle einen unrunden Außenumfang auf und die Nabe weist eine axiale Öffnung mit einem, insbesondere entsprechenden, unrunden Innenumfang auf.

Die Antriebswelle und die Nabe, d.h. die Welle-Nabe-Einheit, sind innerhalb eines ersten Drehmomentbelastungsbereichs axial zueinander verschieblich, um eine axiale Vorschubbewegung der Schraube relativ zu dem Rotationsantrieb zuzulassen. In anderen Worten ermöglicht die Welle-Nabe-Einheit, bei einer Drehmomentbelastung unterhalb eines Schwellenwerts, beispielsweise 4 Nm, eine axiale Relativbewegung zwischen der Antriebswelle und der Nabe, damit ein schraubennaher Abschnitt der Antriebsdrehmoment-Übertragungseinheit eine Vorschubbewegung durchführen kann, während ein rotationsantriebsnaher Abschnitt der Antriebsdrehmoment-Übertragungseinheit diese Vorschubbewegung nicht durchführt, sondern stattdessen in axialer Richtung ortsfest angeordnet ist. Dieser erste Drehmomentbelastungsbereich sollte so gewählt werden, dass in diesem Bereich allenfalls wenig Verschleiß an der Welle-Nabe-Einheit auftritt.

Oberhalb des ersten Drehmomentbelastungsbereichs kann die Reibung zwischen der Welle und der Nabe zu erhöhtem Verschleiß führen bzw. die axiale Verschieblichkeit zueinander nur unter hohen Kräften gegeben sein. In diesem Bereich ist die Ausgleichskupplung aktiv, sodass keine axiale Relativbewegung zwischen der Welle und der Nabe notwendig ist.

Vorteilhafte Ausbildungen der Erfindung sind den Unteransprüchen, der Beschreibung und den Zeichnungen zu entnehmen.

Gemäß einer Ausführungsform ist die Ausgleichskupplung dazu ausgebildet, ein Drehmoment des Rotationsantriebs auf die Welle-Nabe-Einheit zu übertragen. In anderen Worten kann die Ausgleichskupplung einen Abschnitt der Antriebsdrehmoment-Übertragungseinheit bilden, welcher den Rotationsantrieb mit dem Bit verbindet. Hierdurch kann die Schraubvorrichtung besonders kompakt ausgebildet werden.

Gemäß einer besonders einfachen Gestaltung der Ausgleichskupplung umfasst die Ausgleichskupplung ein Führungselement und ein axial an, insbesondere in, dem Führungselement bewegbar gelagertes Ausgleichselement. Vorzugsweise sind das Führungselement und das Ausgleichselement aus einem unelastischen Material, z.B. einer Stahllegierung. Das Führungselement kann direkt oder indirekt mit einer Motorwelle des Rotationsantriebs verbunden sein. In diesem Fall kann das Ausgleichselement direkt oder indirekt mit der Antriebswelle verbunden sein. Alternativ dazu kann das Führungselement direkt oder indirekt mit der Antriebswelle und das Ausgleichselement direkt oder indirekt mit der Motorwelle verbunden sein.

Gemäß einer Ausführungsform ist an dem Ausgleichselement zumindest ein Rollkörper vorgesehen. Der Rollkörper kann eine sich zentrisch um eine Rollachse erstreckende Außenumfangsfläche aufweisen, welche als Abrollfläche dient. Der zumindest eine Rollkörper kann dazu ausgebildet sein, bei einer axialen Relativbewegung zwischen dem Führungselement und dem Ausgleichselement an dem Führungselement abzurollen. Hierdurch wird eine Reibung zwischen dem Führungselement und dem Ausgleichselement reduziert. Vorzugsweise beschränkt sich die Reibung zwischen dem Führungselement und dem Ausgleichselement im Wesentlichen auf Rollreibung.

Alternativ zur Anordnung des zumindest einen Rollkörpers an dem Ausgleichselement kann der zumindest eine Rollkörper an dem Führungselement angeordnet sein. Auch dieser zumindest eine Rollkörper kann eine sich zentrisch um eine Rollachse erstreckende Außenumfangsfläche aufweisen, welche als Abrollfläche dient. Bei einer Relativbewegung zwischen dem Führungselement und dem Ausgleichselement kann der an dem Führungselement angeordnete Rollkörper an dem Ausgleichselement abrollen.

Gemäß einer Ausführungsform ist der zumindest eine Rollkörper dazu ausgebildet, ein Drehmoment des Rotationsantriebs auf die Welle-Nabe-Einheit zu übertragen. Dem zumindest einen Rollkörper kann somit eine Doppelfunktion zukommen: Zum einen ermöglicht der zumindest eine Rollkörper eine reibungsarme Relativbewegung zwischen dem Führungselement und dem Ausgleichselement. Zum anderen dient der zumindest eine Rollkörper zur Übertragung des von dem Rotationsantrieb bereitgestellten Drehmoments von dem Führungselement auf das Ausgleichselement oder von dem Ausgleichselement auf das Führungselement.

Gemäß einer Ausführungsform weist der zumindest eine Rollkörper eine sich in radialer Richtung erstreckende Drehachse auf. Der zumindest eine Rollkörper kann in radialer Richtung von dem übrigen Ausgleichselement abstehen. Dabei kann der zumindest eine Rollkörper in eine sich in axialer Richtung erstreckende Nut in dem Führungselement hineinragen. Hierdurch kann auf besonders einfache Weise eine Drehmomentübertragung zwischen dem Führungselement und dem Ausgleichselement erfolgen.

Vorzugsweise weist der zumindest eine Rollkörper eine Umfangsfläche auf, die unter Last eine sich in axialer Richtung erstreckende Abrollfläche kontaktiert. Die Abrollfläche kann eine Länge in axialer Richtung aufweisen, welche in etwa einem Furchweg der zu setzenden Schraube entspricht. Ein solcher Furchweg kann beispielsweise 15 mm lang sein. Die Abrollfläche kann als Seitenfläche der sich in axialer Richtung erstreckenden Nut ausgebildet sein. Die Abrollfläche, insbesondere die Nut, können an dem Führungselement ausgebildet sein.

Gemäß einer Ausführungsform können mehrere, beispielsweise drei, Rollkörper mit einem oder mehreren der vorgenannten oder nachfolgenden Merkmale vorgesehen sein.

Vorzugsweise umfasst die Ausgleichskupplung ein Federelement. Das Federelement kann zwischen dem Ausgleichselement und dem Führungselement wirken, um das Ausgleichselement mit einer axialen Rückstellkraft zu beaufschlagen, welche das Ausgleichselement in eine Ausgangslage zurückführt, wenn die Drehmomentlast auf die Welle-Nabe-Verbindung unter einen Schwellenwert fällt. Das Federelement kann durch eine Relativbewegung zwischen dem Ausgleichselement und dem Führungselement bei einer den ersten Drehmomentbelastungsbereich übersteigenden Drehmomentlast, d.h. in einem zweiten Drehmomentbelastungsbereich, gespannt werden. Das Federelement ist vorzugsweise als Spiralfeder, insbesondere Spiraldruckfeder, ausgebildet. Das Federelement erstreckt sich vorzugsweise in axialer Richtung und/oder in Umfangsrichtung um das Ausgleichselement herum.

Gemäß einer Ausführungsform umfasst die Ausgleichskupplung ein Dämpfungselement, um eine axiale Relativbewegung zwischen dem Ausgleichselement und dem Führungselement zu dämpfen.

Das Dämpfungselement kann dazu ausgebildet sein, eine durch eine Rückstellkraft des Federelements induzierte Rückstellbewegung des Ausgleichselements zu dämpfen. Hierdurch kann sichergestellt werden, dass eine Anschlagbewegung des Ausgleichselements an einer Stirnfläche des Führungselements keine störenden Geräusche verursacht.

Es hat sich herausgestellt, dass die Welle-Nabe-Verbindung besonders lange Standzeiten aufweist, wenn die Ausgleichskupplung dazu ausgebildet ist, ab einer Auslösekraft zwischen 100 N und 400 N die gemeinsame axiale Bewegung der Welle und der Nabe relativ zu dem Rotationsantrieb zuzulassen. Speziell kann die Ausgleichskupplung dazu ausgebildet, ab einer Auslösekraft zwischen 150 N und 250 N die gemeinsame axiale Bewegung der Welle und der Nabe relativ zu dem Rotationsantrieb zuzulassen. In anderen Worten kann die Ausgleichskupplung aktiv werden, wenn eine Mindestkraft zwischen 150 N und 250 N auf die Kupplung wirkt.

Gemäß einer Ausführungsform ist das Ausgleichselement fest mit der Antriebswelle der Welle-Nabe-Einheit verbunden. "Fest verbunden" bedeutet in diesem Zusammenhang axial und rotativ zueinander unbeweglich aneinander fixiert. Das Führungselement kann fest mit einer Motorwelle des Rotationsantriebs verbunden sein.

Vorzugsweise ist das Ausgleichselement mittels einer Klemmverbindung mit der Antriebswelle der Welle-Nabe-Einheit verbunden. Alternativ kann das Ausgleichselement mittels einer formschlüssigen Verbindung, beispielsweise mittels eines Stifts, mit der Antriebswelle der Welle-Nabe-Einheit verbunden sein. Das Führungselement der Ausgleichskupplung kann mittels einer Klemmverbindung mit der Motorwelle des Rotationsantriebs verbunden sein. Alternativ kann das Führungselement mittels einer formschlüssigen Verbindung, beispielsweise mittels eines Stifts, mit der Motorwelle des Rotationsantriebs verbunden sein.

Gemäß einer Ausführungsform kann die Antriebswelle der Welle-Nabe-Einheit als Keilwelle, insbesondere Vielkeilwelle, ausgebildet sein.

Die Erfindung betrifft zudem eine Verwendung einer Schraubvorrichtung nach zumindest einem der zuvor oder nachstehend genannten Merkmale zum Verschrauben von gewindefurchenden Schrauben und/oder Schrauben mit einem maximalen Einschraubdrehmoment von über 4 Nm.

Nachfolgend wird die Erfindung anhand einer rein beispielhaften Ausführungsform unter Bezugnahme auf die beigefügten Zeichnungen beschrieben. Es zeigen:
- Fig. 1: eine teilweise geschnittene Seitenansicht einer erfindungsgemäßen Schraubvorrichtung;
- Fig. 2A: eine Seitenansicht einer Ausgleichskupplung der Schraubvorrichtung von Fig. 1 in einer Grundstellung;
- Fig. 2B: eine Seitenansicht der Ausgleichskupplung von Fig. 2A in einer Endstellung;
- Fig. 2C: einen Längsschnitt der Ausgleichskupplung von Fig 2A;
- Fig. 2D: einen Längsschnitt der Ausgleichskupplung von Fig 2B;
- Fig. 3A: eine weitere Seitenansicht der Ausgleichskupplung von Fig. 2A;
- Fig. 3B: einen Querschnitt der Ausgleichskupplung entlang der Schnittebene E-E von Fig. 3A;
- Fig. 4A: eine weitere Seitenansicht der Ausgleichskupplung von Fig. 2A; und
- Fig. 4B: einen weiteren Längsschnitt der Ausgleichskupplung entlang der Schnittebene F-F von Fig. 4A.

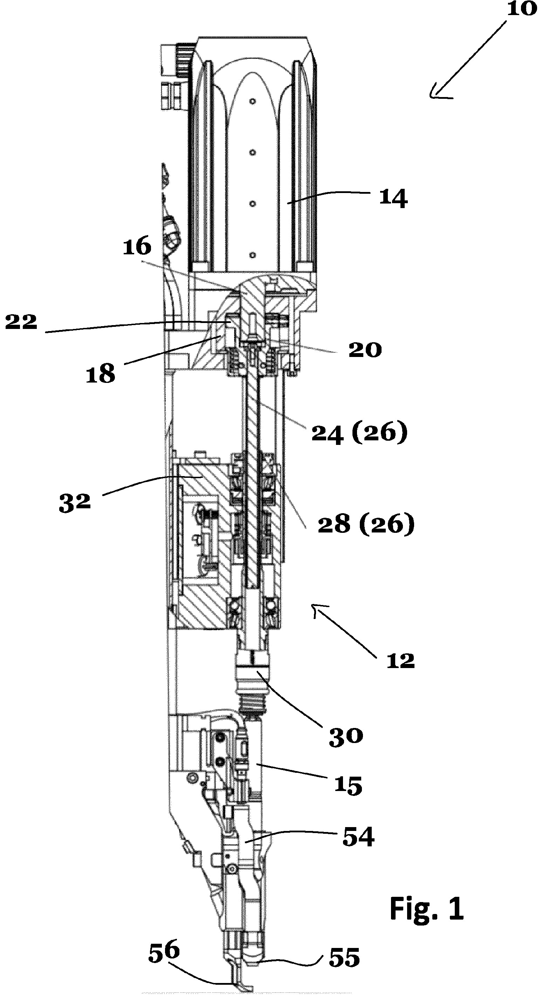

Fig. 1 zeigt eine Schraubvorrichtung 10. Die Schraubvorrichtung 10 umfasst eine Antriebsdrehmoment-Übertragungseinheit 12, die sich von einem Rotationsantrieb 14, welcher im vorliegenden Beispiel als Elektromotor ausgebildet ist, bis zu einem Schraubwerkzeug bzw. Bit 15 erstreckt. Die Antriebsdrehmoment-Übertragungseinheit 12 umfasst eine Motorwelle 16, welche mit einem Eingangselement 18 einer Ausgleichskupplung 20, beispielsweise mittels einer Klemmverbindung, fest verbunden ist. Bei dem Eingangselement 18 handelt es sich um ein rohrförmiges Führungselement 18. In dem Führungselement 18 ist ein Ausgleichselement 22 der Ausgleichskupplung 20 axial verschieblich, d.h. in Fig 1 vertikal verschieblich, gelagert. Das Ausgleichselement 22 dient als Ausgangselement der Ausgleichskupplung 20 und ist fest, beispielsweise mittels einer Klemmverbindung, mit einer Antriebswelle 24 einer Welle-Nabe-Einheit 26 verbunden. Die Antriebswelle 24 ist als Vielkeilwelle ausgebildet. Die Antriebswelle 24 ist mit einer Nabe 28 der Welle-Nabe-Einheit 26 gekoppelt. Die Kopplung zwischen der Antriebswelle 24 und der Nabe 28 ermöglicht es, dass die Nabe 28 sich in axialer Richtung, d.h. in Fig. 1 in vertikaler Richtung, relativ zu der Antriebswelle 24 bewegen lässt, während ein Drehmoment in einem ersten Drehmomentbelastungsbereich an der Antriebsdrehmoment-Übertragungseinheit 12 anliegt. Die Nabe 28 ist mit einer Aufnahme 30 für den Bit 15 gekoppelt.

Der Schraubvorrichtung 10 umfasst ferner einen Vorschubantrieb 32 (nicht vollständig dargestellt). Der Vorschubantrieb 32 ist als pneumatischer Linearantrieb ausgebildet und ist mit der Nabe 28 der Welle-Nabe-Einheit 26 gekoppelt, um die Nabe 28 und die Aufnahme 30, welche einen schraubennahen Abschnitt 34 der Antriebsdrehmoment-Übertragungseinheit 12 bilden, in axialer Richtung relativ zu dem Rotationsantrieb 14 zu bewegen. In dem ersten Drehmomentbelastungsbereich, beispielsweise während die Schraube ein Loch in das Werkstück bohrt, bewegt der Vorschubantrieb 32 die Nabe 28, die Aufnahme 30, den an der Aufnahme 30 befestigten Bit 15 und die Schraube in axialer Richtung, während die Antriebswelle 24, die Ausgleichskupplung 20 und die Motorwelle 16, d.h. ein antriebsnaher Abschnitt der Antriebsdrehmoment-Übertragungseinheit 12, keine Bewegung in axialer Richtung durchführen.

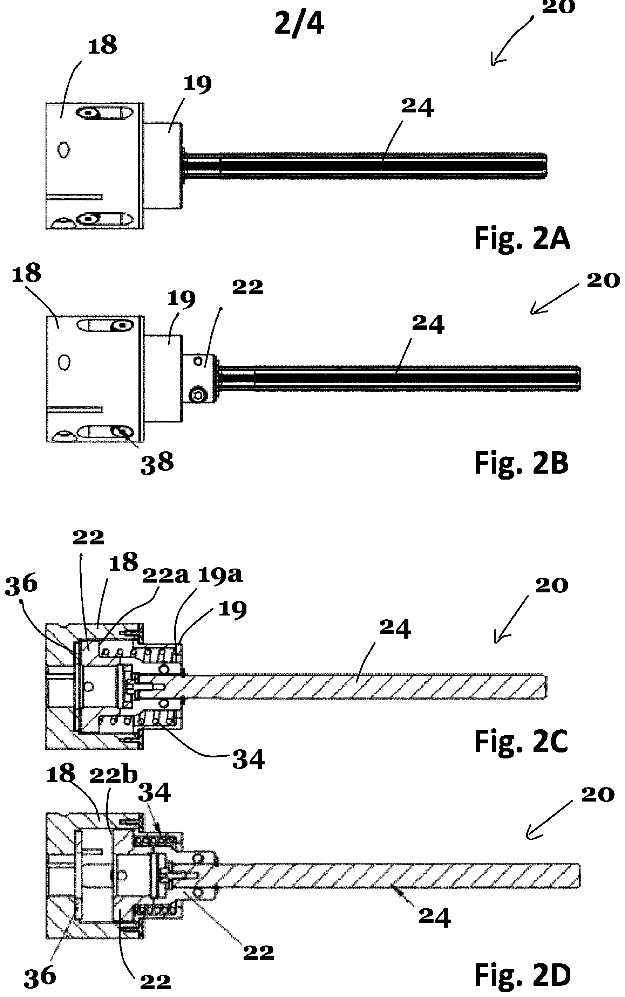

Wenn jedoch, beispielsweise während die Schraube ein Gewinde in dem Werkstück ausformt, das an der Antriebsdrehmoment-Übertragungseinheit 12 anliegende Drehmoment den ersten Drehmomentbelastungsbereich übersteigt und sich somit in einem zweiten Drehmomentbelastungsbereich befindet, wird die Ausgleichskupplung 20 aktiv. Dies bedeutet, dass die Ausgleichskupplung 20 ihre Grundstellung (siehe Fig. 2A und 2C) verlässt und das Ausgleichselement 22 eine Ausgleichsbewegung durchführt, wie bei dem Vergleich der Figuren 2A und 2C mit den Figuren 2B und 2D zu sehen ist.

Wie in Fig 2C zu sehen ist, ist das Ausgleichselement 22 in der Grundstellung durch ein Federelement 34 in Form einer Spiraldruckfeder in eine Grundstellung vorgespannt. Hierzu beaufschlagt das Federelement 34 eine zur Schraube hin ausgerichtete Stirnfläche 22a des Ausgleichselements 22. Das Federelement 34 erstreckt sich zwischen der zur Schraube hin ausgerichteten Stirnfläche 22a des Ausgleichselements 22 und einer, der Stirnfläche 22a zugewandten, Stirnfläche 19a einer mit dem Führungselement 18 verbundenen Kappe 19. Das Federelement 34 spannt das Führungselement 22 in der Grundstellung (siehe Fig. 2C) gegen ein Dämpfungselement 36 vor, sodass eine schraubenferne Stirnfläche 22b (siehe Fig. 2D) an dem Dämpfungselement 36 anliegt.

Wenn die Ausgleichskupplung aktiv ist, bewegt sich das Ausgleichselement 22 in axialer Richtung relativ zu dem Führungselement 18. Dabei wird das Federelement 34 komprimiert (siehe Fig. 2D). Durch diese Ausgleichsbewegung in der Ausgleichskupplung 20 kann sich die Antriebswelle 24 mit der Nabe 28 mitbewegen, sodass Verschleiß zwischen der Antriebswelle 24 und der Nabe 28 bei hohen Drehmomenten vermieden werden kann.

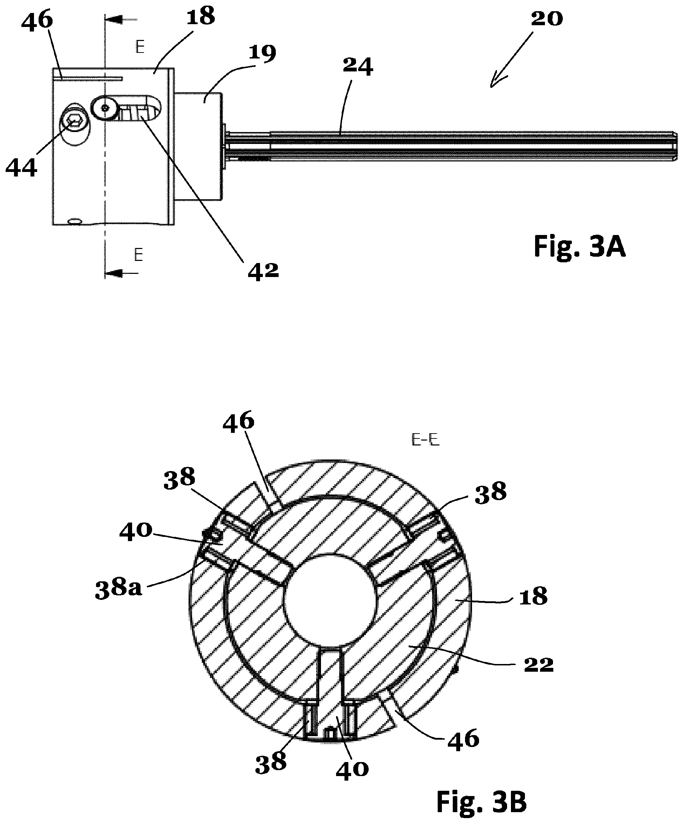

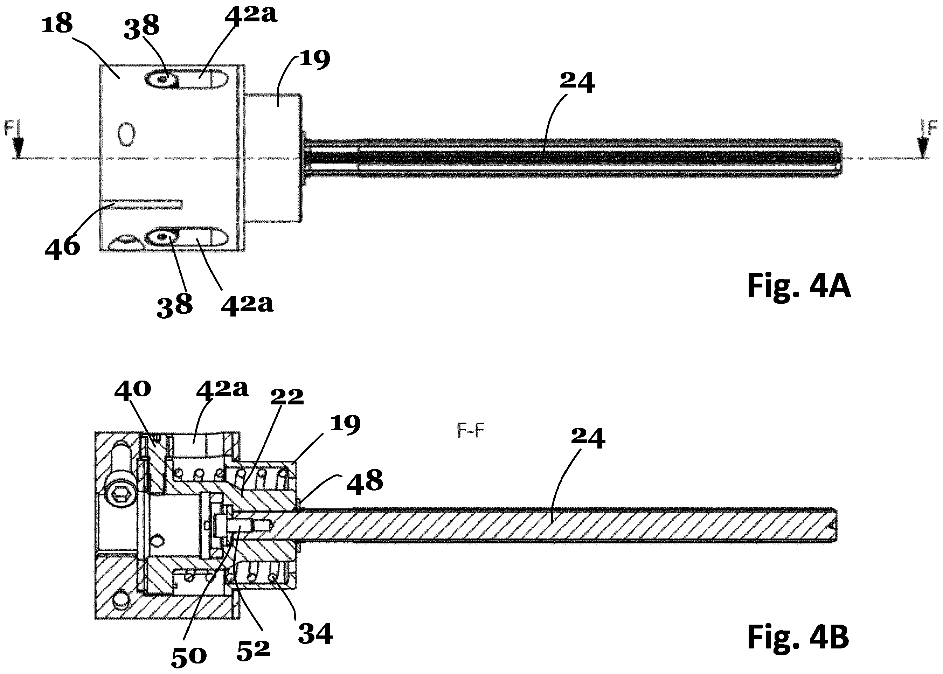

Um die Relativbewegung zwischen dem Ausgleichselement 22 und dem Führungselement 18 möglichst reibungsarm zu gestalten, sind an dem Ausgleichselement 22, wie in Fig. 3B zu sehen ist, mehrere, hier drei, Rollkörper 38 vorgesehen, die bei einer axialen Relativbewegung zwischen dem Führungselement 18 und dem Ausgleichselement 22 an dem Führungselement 18 abrollen. Die Rollkörper 38 sind auf sich in radialer Richtung erstreckenden Achsen 40 drehbar gelagert. Hierzu können Gleitlager oder Nadellager vorgesehen sein. Die Rollkörper 38 sind jeweils in sich in axialer Richtung erstreckenden Nuten 42 (siehe Fig. 3A) angeordnet. Eine Außenumfangsfläche 38a der Rollkörper 38 steht, wenn ein Drehmoment an der Antriebsdrehmoment-Übertragungseinheit 12 anliegt, mit einer der Seitenflächen 42a (siehe Fig. 4A) in Kontakt, um das Drehmoment von dem Führungselement 18 auf das Ausgleichselement 22 zu übertragen. Hierdurch ist es möglich, während einer Ausgleichsbewegung des Ausgleichselements 22 relativ zu dem Führungselement 18 ein Drehmoment von dem Führungselement 18 auf das Ausgleichselement 22 zu übertragen.

Wie insbesondere in Fig. 3A zu sehen ist, weist das Führungselement 18 eine Klemmschraube 44 und eine sich in axialer Richtung erstreckende Klemmnut 46 auf. Die Klemmschraube 44 und die Klemmnut 46 bilden eine Klemmeinheit, die es ermöglicht, das Führungselement 18 mittels einer Klemmverbindung mit der Motorwelle 16 zu koppeln.

In Fig. 4B ist eine mögliche Kopplung zwischen dem Ausgleichselement 22 und der Antriebswelle 24 gezeigt. Die gezeigte Kopplung ist eine formschlüssige Kopplung. Hierzu ist an der Antriebswelle 24 ein Sicherungsring 48 angebracht, welche eine axiale Bewegung des Ausgleichselement 22 in Richtung der Schraube blockiert. Zudem ist eine Unterlegscheibe 50 vorgesehen, welche mit einer stirnseitig in die Antriebswelle 24 eingeschraubten Schraube 52 derart fixiert ist, dass die Unterlegscheibe 50 eine Bewegung der Antriebswelle 24 relativ zu dem Ausgleichselement 22 in Richtung der Schraube blockiert. Zudem ist das Ausgleichselement 22 mittels einer Presspassung auf der Antriebswelle 24 befestigt. Somit sind das Ausgleichselement 22 und die Antriebswelle 24 auch kraftschlüssig miteinander gekoppelt. Alternativ kann das Ausgleichselement 22 nur formschlüssig oder nur kraftschlüssig mit der Antriebswelle 24 gekoppelt sein. Wichtig ist dabei jedoch, dass über die Kopplung ein Drehmoment und eine Axialkraft übertragbar sind.

Die Schraubvorrichtung 10 (siehe Fig. 1) umfasst zudem eine automatische Zuführung 54 für Schrauben, welche die Schrauben, insbesondere mittels Druckluft, einer Aufnahme 55 zuführt. Die Schraubvorrichtung 10 umfasst zudem einen Niederhalter 56, welcher dazu ausgebildet ist, das Werkstück, beispielsweise ein Blech, zu fixieren.

### Bezugszeichenliste

- 10: Schraubvorrichtung
- 12: Antriebsdrehmoment-Übertragungseinheit
- 14: Rotationsantrieb
- 15: Bit
- 16: Motorwelle
- 18: Führungselement
- 19: Kappe
- 19a: Stirnfläche
- 20: Ausgleichskupplung
- 22: Ausgleichselement
- 22a: Stirnfläche
- 22b: Stirnfläche
- 24: Antriebswelle
- 26: Welle-Nabe-Einheit
- 28: Nabe
- 30: Aufnahme
- 32: Vorschubantrieb
- 34: Federelement
- 36: Dämpfungselement
- 38: Rollkörper
- 38a: Umfangsfläche
- 40: Achse
- 42: Nut
- 42a: Abrollfläche
- 44: Klemmschraube
- 46: Klemmnut
- 48: Sicherungsring
- 50: Unterlegscheibe
- 52: Schraube
- 54: automatische Zuführung
- 55: Aufnahme
- 56: Niederhalter

## Patentansprüche

1. Schraubvorrichtung (10) zum Setzen einer Schraube, insbesondere einer gewindefurchenden Schraube und/oder einer Schraube mit einem maximalen Einschraubdrehmoment von über 4 Nm, umfassend:
einen Rotationsantrieb (14) zum rotativen Antrieb der Schraube,
einen Vorschubantrieb (32) zur Erzeugung einer axialen Vorschubkraft auf die Schraube,
eine Welle-Nabe-Einheit (26) mit einer, einen unrunden Querschnitt aufweisenden, Antriebswelle (24) und einer, mit der Antriebswelle (24) rotationsfest verbundenen, Nabe (28),
wobei die Antriebswelle (24) und die Nabe (28) zur Übertragung eines von dem Rotationsantrieb (14) bereitgestellten Drehmoments dienen, und
wobei die Antriebswelle (24) und die Nabe (28) innerhalb eines ersten Drehmomentbelastungsbereichs axial zueinander verschieblich sind, um eine axiale Vorschubbewegung der Schraube relativ zu dem Rotationsantrieb (14) zuzulassen,
**dadurch gekennzeichnet, dass**
eine Ausgleichskupplung (20) vorgesehen ist, welche bei einer den ersten Drehmomentbelastungsbereich übersteigenden Drehmomentlast eine gemeinsame axiale Bewegung der Antriebswelle (24) und der Nabe (28) relativ zu dem Rotationsantrieb (14) zulässt.

2. Schraubvorrichtung (10) nach Anspruch 1,
**dadurch gekennzeichnet, dass**
die Ausgleichskupplung (20) dazu ausgebildet ist, ein Drehmoment des Rotationsantriebs (14) auf die Welle-Nabe-Einheit (26) zu übertragen.

3. Schraubvorrichtung (10) nach Anspruch 1 oder 2,
**dadurch gekennzeichnet, dass**
die Ausgleichskupplung (20) ein Führungselement (18) und ein axial an, insbesondere in, dem Führungselement (18) bewegbar gelagertes Ausgleichselement (22) aufweist.

4. Schraubvorrichtung (10) nach Anspruch 3,
**dadurch gekennzeichnet, dass**
an dem Ausgleichselement (22) zumindest ein Rollkörper (38) vorgesehen ist, der bei einer axialen Relativbewegung zwischen dem Führungselement (18) und dem Ausgleichselement (22) an dem Führungselement (18) abrollt.

5. Schraubvorrichtung (10) nach Anspruch 4,
**dadurch gekennzeichnet, dass**
der zumindest eine Rollkörper (38) dazu ausgebildet ist, ein von dem Rotationsantriebs (14) erzeugtes Drehmoment auf die Welle-Nabe-Einheit (26) zu übertragen.

6. Schraubvorrichtung (10) nach Anspruch 4 oder 5,
**dadurch gekennzeichnet, dass**
der zumindest eine Rollkörper (38) eine sich in radialer Richtung erstreckende Drehachse aufweist.

7. Schraubvorrichtung (10) nach zumindest einem der Ansprüche 4 bis 6,
**dadurch gekennzeichnet, dass**
der zumindest eine Rollkörper (38) eine Umfangsfläche (38a) aufweist, und die Umfangsfläche (38a) unter Last eine sich in axialer Richtung erstreckende Abrollfläche (42a) kontaktiert.

8. Schraubvorrichtung (10) nach zumindest einem der Ansprüche 3 bis 7,
**dadurch gekennzeichnet, dass**
die Ausgleichskupplung (20) ein Federelement (34) umfasst, wobei das Federelement (34) zwischen dem Ausgleichselement (22) und dem Führungselement (18) wirkt.

9. Schraubvorrichtung (10) nach zumindest einem der Ansprüche 3 bis 8,
**dadurch gekennzeichnet, dass**
die Ausgleichskupplung (20) ein Dämpfungselement (36) umfasst, um eine axiale Relativbewegung zwischen dem Ausgleichselement (22) und dem Führungselement (18) zu dämpfen.

10. Schraubvorrichtung (10) nach Anspruch 8 und 9,
**dadurch gekennzeichnet, dass**
das Dämpfungselement (36) dazu ausgebildet ist, eine durch eine Rückstellkraft des Federelements (34) induzierte Rückstellbewegung des Ausgleichselements (22) zu dämpfen.

11. Schraubvorrichtung (10) nach zumindest einem der vorherigen Ansprüche,
**dadurch gekennzeichnet, dass**
die Ausgleichskupplung (20) dazu ausgebildet ist, ab einer Auslösekraft zwischen 100 N und 400 N, insbesondere zwischen 150 N und 250 N, die gemeinsame axiale Bewegung der Antriebswelle (24) und der Nabe (28) relativ zu dem Rotationsantrieb (14) zuzulassen.

12. Schraubvorrichtung (10) nach zumindest einem der Ansprüche 3 bis 11,
**dadurch gekennzeichnet, dass**
das Ausgleichselement (22) fest mit der Antriebswelle (24) der Welle-Nabe-Einheit (26) verbunden ist.

13. Schraubvorrichtung (10) nach Anspruch 12,
**dadurch gekennzeichnet, dass**
das Ausgleichselement (22) mittels einer Klemmverbindung mit der Antriebswelle (24) der Welle-Nabe-Einheit (26) verbunden ist.

14. Schraubvorrichtung (10) nach zumindest einem der vorherigen Ansprüche,
**dadurch gekennzeichnet, dass**
die Antriebswelle (24) als Keilwelle, insbesondere Vielkeilwelle, ausgebildet ist.

15. Verwendung einer Schraubvorrichtung (10) nach zumindest einem der vorherigen Ansprüche zum Verschrauben von gewindefurchenden Schrauben und/oder Schrauben mit einem maximalen Einschraubdrehmoment von über 4 Nm.

## Claims

1. A screwing apparatus (10) for setting a screw, in particular a thread-forming screw and/or a screw with a maximum screw-in torque of more than 4 Nm, said screwing apparatus (10) comprising:
a rotary drive (14) for rotationally driving the screw,
a feed drive (32) for generating an axial feed force on the screw,
a shaft-hub unit (26) comprising a drive shaft (24), which has a non-circular cross-section, and a hub (28) rotationally fixedly connected to the drive shaft (24),
wherein the drive shaft (24) and the hub (28) serve to transmit a torque provided by the rotary drive (14), and
wherein the drive shaft (24) and the hub (28) are axially displaceable relative to one another within a first torque load range to allow an axial feed movement of the screw relative to the rotary drive (14),
**characterized in that**
a compensating coupling (20) is provided that allows a joint axial movement of the drive shaft (24) and the hub (28) relative to the rotary drive (14) when a torque load exceeds the first torque load range.

2. A screwing apparatus (10) according to claim 1,
**characterized in that**
the compensating coupling (20) is configured to transmit a torque of the rotary drive (14) to the shaft-hub unit (26).

3. A screwing apparatus (10) according to claim 1 or 2,
**characterized in that**
the compensating coupling (20) has a guide element (18) and a compensating element (22) axially movably supported at, in particular in, the guide element (18).

4. A screwing apparatus (10) according to claim 3,
**characterized in that**
at least one rolling body (38) is provided at the compensating element (22) and rolls off at the guide element (18) during an axial relative movement between the guide element (18) and the compensating element (22).

5. A screwing apparatus (10) according to claim 4,
**characterized in that**
the at least one rolling body (38) is configured to transmit a torque generated by the rotary drive (14) to the shaft-hub unit (26).

6. A screwing apparatus (10) according to claim 4 or 5,
**characterized in that**
the at least one rolling body (38) has an axis of rotation extending in a radial direction.

7. A screwing apparatus (10) according to at least one of the claims 4 to 6,
**characterized in that**
the at least one rolling body (38) has a peripheral surface (38a), and the peripheral surface (38a) contacts a roll-off surface (42a), which extends in an axial direction, under load.

8. A screwing apparatus (10) according to at least one of the claims 3 to 7,
**characterized in that**
the compensating coupling (20) comprises a spring element (34), with the spring element (34) acting between the compensating element (22) and the guide element (18).

9. A screwing apparatus (10) according to at least one of the claims 3 to 8,
**characterized in that**
the compensating coupling (20) comprises a damping element (36) to dampen an axial relative movement between the compensating element (22) and the guide element (18).

10. A screwing apparatus (10) according to claim 8 and 9,
**characterized in that**
the damping element (36) is configured to dampen a return movement of the compensating element (22) that is induced by a return force of the spring element (34).

11. A screwing apparatus (10) according to at least one of the preceding claims, **characterized in that**
the compensating coupling (20) is configured to allow the joint axial movement of the drive shaft (24) and the hub (28) relative to the rotary drive (14) from a release force between 100 N and 400 N, in particular between 150 N and 250 N.

12. A screwing apparatus (10) according to least one of the claims 3 to 11,
**characterized in that**
the compensating element (22) is fixedly connected to the drive shaft (24) of the shaft-hub unit (26).

13. A screwing apparatus (10) according to claim 12,
**characterized in that**
the compensating element (22) is connected to the drive shaft (24) of the shaft-hub unit (26) by means of a clamping connection.

14. A screwing apparatus (10) according to at least one of the preceding claims,
**characterized in that**
the drive shaft (24) is configured as a spline shaft, in particular as a multiple spline shaft.

15. Use of a screwing apparatus (10) according to at least one of the preceding claims for screwing thread-forming screws and/or screws with a maximum screw-in torque of more than 4 Nm.

## Revendications

1. Dispositif de vissage (10) pour mettre en place une vis, en particulier une vis auto-taraudeuse et/ou une vis avec un couple de vissage maximal de plus de 4 Nm, comprenant :
un entraînement en rotation (14) pour l'entraînement en rotation de la vis, un entraînement d'avance (32) pour générer une force d'avance axiale sur la vis,
un ensemble arbre-moyeu (26) comprenant un arbre d'entraînement (24) de section transversale non ronde et un moyeu (28) relié à l'arbre d'entraînement (24) de manière solidaire en rotation,
l'arbre d'entraînement (24) et le moyeu (28) servant à transmettre un couple de rotation fourni par l'entraînement en rotation (14), et
l'arbre d'entraînement (24) et le moyeu (28) pouvant être déplacés axialement l'un par rapport à l'autre à l'intérieur d'une première plage de charge de couple de rotation, afin de permettre un mouvement d'avance axial de la vis par rapport à l'entraînement en rotation (14),
**caractérisé en ce que**
il est prévu un accouplement de compensation (20) qui, en cas de charge de couple de rotation dépassant la première plage de charge de couple de rotation, autorise un mouvement axial commun de l'arbre d'entraînement (24) et du moyeu (28) par rapport à l'entraînement en rotation (14).

2. Dispositif de vissage (10) selon la revendication 1,
**caractérisé en ce que**
l'accouplement de compensation (20) est conçu pour transmettre un couple de rotation de l'entraînement en rotation (14) à l'ensemble arbre-moyeu (26).

3. Dispositif de vissage (10) selon la revendication 1 ou 2,
**caractérisé en ce que**
l'accouplement de compensation (20) comprend un élément de guidage (18) et un élément de compensation (22) logé de manière mobile axialement sur, en particulier dans, l'élément de guidage (18).

4. Dispositif de vissage (10) selon la revendication 3,
**caractérisé en ce que**
au moins un corps de roulement (38) est prévu sur l'élément de compensation (22), lequel roule sur l'élément de guidage (18) lors d'un mouvement axial relatif entre l'élément de guidage (18) et l'élément de compensation (22).

5. Dispositif de vissage (10) selon la revendication 4,
**caractérisé en ce que**
ledit au moins un corps de roulement (38) est conçu pour transmettre un couple de rotation, généré par l'entraînement en rotation (14), à l'ensemble arbre-moyeu (26).

6. Dispositif de vissage (10) selon la revendication 4 ou 5,
**caractérisé en ce que**
ledit au moins un corps de roulement (38) présente un axe de rotation s'étendant dans la direction radiale.

7. Dispositif de vissage (10) selon l'une au moins des revendications 4 à 6,
**caractérisé en ce que**
ledit au moins un corps de roulement (38) présente une surface périphérique (38a), et ladite surface périphérique (38a) vient en contact sous charge avec une surface de roulement (42a) s'étendant dans la direction axiale.

8. Dispositif de vissage (10) selon l'une au moins des revendications 3 à 7,
**caractérisé en ce que**
l'accouplement de compensation (20) comprend un élément de ressort (34), l'élément de ressort (34) agissant entre l'élément de compensation (22) et l'élément de guidage (18).

9. Dispositif de vissage (10) selon l'une au moins des revendications 3 à 8,
**caractérisé en ce que**
l'accouplement de compensation (20) comprend un élément amortisseur (36) pour amortir un mouvement axial relatif entre l'élément de compensation (22) et l'élément de guidage (18).

10. Dispositif de vissage (10) selon les revendications 8 et 9,
**caractérisé en ce que**
l'élément amortisseur (36) est conçu pour amortir un mouvement de rappel de l'élément de compensation (22) induit par une force de rappel de l'élément de ressort (34).

11. Dispositif de vissage (10) selon l'une au moins des revendications précédentes,
**caractérisé en ce que**
l'accouplement de compensation (20) est conçu pour autoriser, à partir d'une force de déclenchement comprise entre 100 N et 400 N, en particulier entre 150 N et 250 N, le déplacement axial commun de l'arbre d'entraînement (24) et du moyeu (28) par rapport à l'entraînement en rotation (14).

12. Dispositif de vissage (10) selon l'une au moins des revendications 3 à 11,
**caractérisé en ce que**
l'élément de compensation (22) est solidaire de l'arbre d'entraînement (24) de l'ensemble arbre-moyeu (26).

13. Dispositif de vissage (10) selon la revendication 12,
**caractérisé en ce que**
l'élément de compensation (22) est relié à l'arbre d'entraînement (24) de l'ensemble arbre-moyeu (26) par une liaison par serrage.

14. Dispositif de vissage (10) selon l'une au moins des revendications précédentes,
**caractérisé en ce que**
l'arbre d'entraînement (24) est un arbre cannelé, en particulier un arbre à cannelures multiples.

15. Utilisation d'un dispositif de vissage (10) selon l'une au moins des revendications précédentes pour visser des vis auto-taraudeuses et/ou des vis avec un couple de vissage maximal de plus de 4 Nm.
